# EUROPÄISCHE PATENTSCHRIFT

(11) **EP 2 006 125 B1**
(45) Veröffentlichungstag und Bekanntmachung des Hinweises auf die Patenterteilung: **24.02.2010**
(21) Anmeldenummer: 08154986.7
(22) Anmeldetag: 23.04.2008
(51) Int. Cl.: B60C 19/00, B60C 19/12

(54) **Fahrzeugluftreifen**
Pneumatic tyres for a vehicle
Pneus de véhicule

(30) Priorität: 22.06.2007 DE 102007028932
(43) Veröffentlichungstag der Anmeldung: 24.12.2008
(73) Patentinhaber: Continental Reifen Deutschland GmbH, 30165 Hannover (DE)
(72) Erfinder: Schürmann, Oliver, 30855, Langenhagen (DE); Volk, Heiner, 31535, Neustadt (DE); Saemann, Ernst-Ulrich, 30982, Pattensen (DE); Gauterin, Frank, 76829, Landau (DE)
(74) Vertreter: Finger, Karsten

(56) Entgegenhaltungen:
- EP-A- 0 161 201
- EP-A- 1 659 004
- DE-A1- 3 042 350

## Beschreibung

Die Erfindung betrifft einen Fahrzeugluftreifen mit einem in seinem Inneren an der dem Laufstreifen gegenüberliegenden Innenfläche vorab aufgebrachten, selbsttätig abdichtenden Dichtmittel.

Ein derartiger Fahrzeugluftreifen ist beispielsweise aus der EP-A-0 161 201 bekannt geworden. Das Dichtmittel weist beim Aufbringen an die Innenfläche des Reifens eine Haftung auf, so dass es an der Innenfläche des Reifens anhaftet.

Aus der EP-A-1 659 004 ist es zudem bekannt, einen aus Polyurethanschaum bestehenden Ring mittels eines Klebers, welcher aus einem in einem Lösungsmittel gelösten synthetischen Kautschuk bestehen kann, an der Innenfläche des Reifens zu befestigen. Möglich ist auch die-Befestigung des Schaumstoffringes-mittels geeigneter Doppelklebebänder.

Es ist ferner bekannt, Fahrzeugluftreifen derart auszurüsten, dass sie sich bei Durchstich - Beschädigung des Reifens selbstabdichtend verhalten. Diesbezüglich wird beispielsweise in der EP-B-1 378 379 ein Dichtband vorgeschlagen, welches aus einer Schaumstoffschicht besteht, die mit einer die Dichtfunktion sicher stellenden Klebeschicht imprägniert ist, auf welche eine Verbindungsschicht aufgebracht wird, welche ebenfalls aus einem Klebemittel hergestellt ist und mittels welcher das Dichtband an der inneren Oberfläche des Reifens angebracht wird. In der US-A- 3,981,342 sind weitere Möglichkeiten zum Herstellen bzw. Einbringen einer selbstdichtenden Schicht im Inneren eines Fahrzeugluftreifens beschrieben. Bei einer dieser Ausführungsvarianten wird die Dichtschicht zwischen der Karkasse und der aus einer Kautschukmischung bestehenden Innenschicht des Reifens während der Herstellung des Reifens eingebracht. Bei einer anderen Variante soll die Dichtschicht aus einer Lösung, die mittels Sprühen aufgebracht wird, hergestellt werden. Bei einer anderen Ausführungsform wird eine heiße Dichtmittelzusammensetzung direkt durch Extrusion auf der Innenumfangsfläche des Reifens angebracht.

Der Erfindung liegt die Aufgabe zu Grunde, einen Innenabsorber aus Schaumstoff in einem pannensicheren Reifen, welcher eine Abdichtung gegenüber Durchstichen aufweist, vorzusehen.

Gelöst wird die gestellte Aufgabe erfindungsgemäß dadurch, dass das Dichtmittel zumindest unmittelbar nach seinem Aufbringen eine zum Anhaften eines schallabsorbierenden Schaumstoffringes erforderliche Klebrigkeit aufweist, dass ein schallabsorbierender Schaumstoffring an dem Dichtmittel haftend angebracht ist und dass das Dichtmittel ein Polyurethan-Gel ist.

Bei einem erfindungsgemäß ausgeführten Reifen wird daher ein zur selbsttätigen Abdichtung vorgesehenes Dichtmittel gleichzeitig als "Haftmittel" zum Befestigen des schallabsorbierenden Schaumstoffringes verwendet.

Als Dichtmittel wird ein Dichtmittel Polyurethan-Gel verwendet, welches selbsttätig abdichtet und zumindest unmittelbar nach dem Aufbringen auf die innere Oberfläche des Reifens soweit klebrig ist, dass der Schaumstoffring angepresst und derart haftend mit dem Dichtmittel verbunden werden kann.

Der schallabsorbierende Schaumstoffring kann bereits auf einer relativ dünnen Schicht des Dichtmittels haftend angebracht werden. Optimal ist eine Dicke der Dichtmittelschicht zwischen 0,5 mm und 8 mm. Der Schaumstoffring 6 kann ein relativ großvolumiger Schaumstoffring sein oder auch ein relativ kleines Volumen aufweisen, je nach den Anforderungen bezüglich der schallabsorbierenden Eigenschaften. Bevorzugt weist der Schaumstoffring ein Volumen von 0,5 % bis 50 % des mit einer Felge gebildeten Reifeninnenraumes auf.

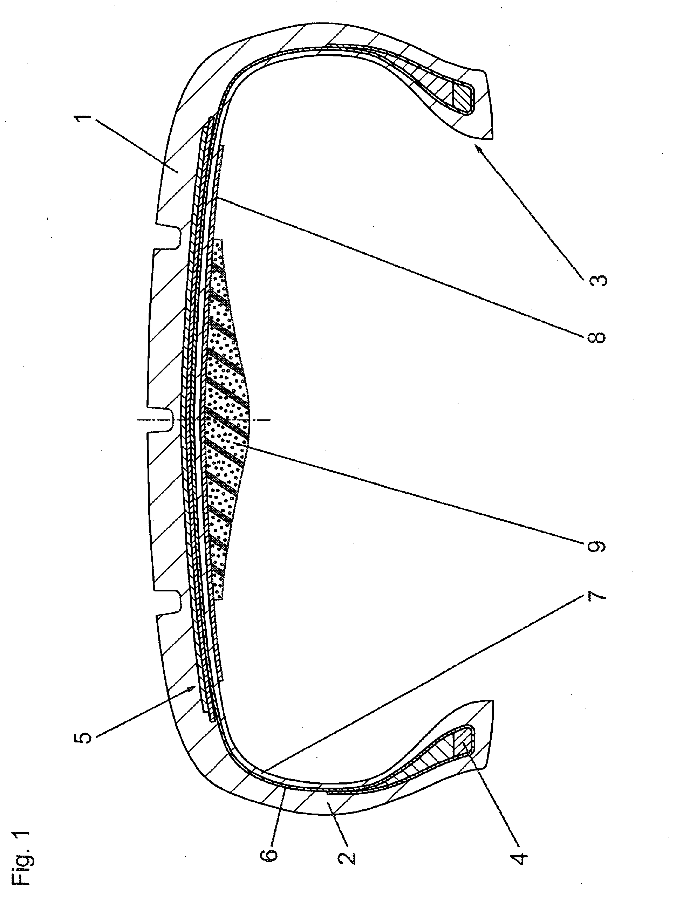

Weitere Merkmale, Vorteile und Einzelheiten der Erfindung werden nun anhand der Zeichnung, die ein Ausführungsbeispiel darstellt, näher beschrieben. Dabei zeigt die einzige Zeichnungsfigur, Fig. 1, schematisch einen Querschnitt durch einen Fahrzeugluftreifen.

In Fig. 1 ist ein Querschnitt durch einen PKW-Radialreifen dargestellt, welcher einen profilierten Laufstreifen 1, Seitenwände 2, Wulstbereiche 3, Wulstkerne 4 sowie einen mehrlagigen Gürtelverband 5 und einer Karkasseinlage 6 aufweist. An seiner inneren Fläche ist der Reifen mit einer Innenschicht 7 aus einer luftdicht ausgeführten Gummimischung bedeckt.

An der dem Laufstreifen 1 gegenüberliegenden inneren Oberfläche der Innenschicht 7 ist nachträglich (bei fertigem Reifen) ein Dichtmittel 8 aufgebracht, welches in der Lage ist, sich bei Durchstich - Beschädigung des Reifens selbstabdichtend zu verhalten. Am Dichtmittel 8 haftet ein schallabsorbierender Schäumstoffring 9, welcher unmittelbar nach dem Aufbringen des Dichtmittels 8, solange dieses noch ausreichend klebrig ist, auf das Dichtmittel 8 aufgepresst wird, wie nachfolgend beschrieben wird. Der schallabsorbierende Schaumstoffring 9 ist bezüglich seiner schallabsorbierenden Eigenschaften auf die Reifenhohlraumfrequenz abgestimmt.

Der Schaumstoffring 9 weist beispielsweise den in Fig. 1 gezeigten etwa langgestreckt dreieckförmigen, bezüglich des Reifensäquators symmetrischen Querschnitt auf. Der Schaumstoffring 9 wird ferner derart ausgeführt, dass sein Volumen zwischen 0,5 % und 50 % des Reifeninnenraumes, ermittelt zwischen dem auf einer Felge aufgebrachten Reifen und der Felge, einnimmt. Geeignete Schaumstoffringe sind an sich bekannt, beispielsweise aus der EP-A-1 659 004.

Als Dichtmittel kommen beispielsweise Polyurethan-Gele in Frage. Das Dichtmittel wird, beispielsweise durch Aufsprühen, derart eingebracht, dass es zumindest die dem Laufstreifen 1 gegenüberliegende innere Oberfläche bedeckt. Zur optimalen Verteilung des Dichtmittels an der Innenfläche kann der Reifen in Rotation versetzt werden. Das Dichtmittel wird ferner in einer solchen Menge eingebracht, dass die Schichtdicke des Dichtmittels zwischen 0,5 mm und 8 mm beträgt. Zumindest unmittelbar nach dem Aufbringen soll das Dichtmittel relativ flüssig und klebrig sein. Zu diesem Zeitpunkt wird der vorgefertigte Schaumstoffring 9 in das Innere des Reifens eingebracht und angedrückt. Nach dem Ausreagieren haftet der Schaumstoffring 9 an dem elastisch deformierbaren, aber ortsfest verbleibenden Dichtmittel 8.

### Bezugszeichenliste

- 1: Laufstreifen
- 2: Seitenwände
- 3: Wulstbereiche
- 4: Wulstkerne
- 5: Gürtelverband
- 6: Karkasseinlage
- 7: Innenschicht
- 8: Dichtmittellage
- 9: schallabsorbierender Schaumstoffring

## Patentansprüche

1. Fahrzeugluftreifen mit einem in seinem Inneren an der dem Laufstreifen gegenüberliegenden Innenfläche vorab aufgebrachten, selbsttätig abdichtenden Dichtmittel (8), wobei
das Dichtmittel (8) zumindest unmittelbar nach seinem Aufbringen eine zum Anhaften eines schallabsorbierenden Schaumstoffringes (9) erforderliche Klebrigkeit aufweist, **dadurch gekennzeichnet, dass** der schallabsorbierende Schaumstoffring (9) an dem Dichtmittel (8) haftend angebracht ist und dass das Dichtmittel ein Polyurethan-Gel ist.

2. Fahrzeugluftreifen nach Anspruch 1, **dadurch gekennzeichnet, dass** die Schichtdicke des Dichtmittels (8) 0,5 mm bis 8 mm beträgt.

3. Fahrzeugluftreifen-nach Anspruch 1, **dadurch gekennzeichnet, dass** der Schaumstoffring (9) ein Volumen von 0,5 % bis 50 % des mit einer Felge gebildeten Reifeninnenraumes aufweist.

## Claims

1. Pneumatic vehicle tyre with a self-sealing sealant (8) applied in advance in its interior to the inner surface lying opposite the tread, wherein the sealant (8) has immediately after its application a tackiness that is required for the adhesive attachment of a sound-absorbing foam ring (9), **characterized in that** the sound-absorbing foam ring (9) is attached to the sealant (8) in an adhesively bonding manner and **in that** the sealant is a polyurethane gel.

2. Pneumatic vehicle tyre according to Claim 1, **characterized in that** the layer thickness of the sealant (8) is 0.5 mm to 8 mm.

3. Pneumatic vehicle tyre according to Claim 1, **characterized in that** the foam ring (9) has a volume of from 0.5% to 50% of the interior tyre space formed by a rim.

## Revendications

1. Bandage pneumatique pour roue de véhicule qui présente un moyen d'étanchéité (8) qui assure automatiquement l'étanchéité, appliqué préalablement du côté intérieur sur la surface intérieure située face à la bande de roulement,
le moyen d'étanchéité (8) présentant au moins immédiatement après son application le pouvoir adhésif nécessaire pour faire adhérer un anneau (9) de mousse absorbant le bruit,
**caractérisé en ce que**
l'anneau (9) de mousse absorbant le bruit est appliqué de manière à adhérer au moyen d'étanchéité (8) et
**en ce que** le moyen d'étanchéité est un gel de polyuréthane.

2. Bandage pneumatique pour roue de véhicule selon la revendication 1, **caractérisé en ce que** l'épaisseur de la couche de moyen d'étanchéité (8) est comprise entre 0,5 mm et 8 mm.

3. Bandage pneumatique pour roue de véhicule, **caractérisé en ce que** le volume de l'anneau (9) de mousse représente de 0,5 % à 50 % de l'espace intérieur du bandage formé avec une jante.
